# EUROPEAN PATENT SPECIFICATION

(11) **EP 1 412 137 B1**
(45) Date of publication and mention of the grant of the patent: **21.02.2007**
(21) Application number: 02747596.1
(22) Date of filing: 25.07.2002
(51) Int. Cl.: B25J 15/00

(54) **GRIPPING APPARATUS WITH TWO FINGERS COVERED BY A MOVEABLE FILM**
GREIFVORRICHTUNG MIT ZWEI VON EINEM BEWEGBAREN FILM BESCHICHTETEN FINGERN
APPAREIL DE PREHENSION A DEUX DOIGTS RECOUVERTS D'UN FEUIL MOBILE

(30) Priority: 30.07.2001 GB 0118545
(43) Date of publication of application: 28.04.2004
(73) Proprietor: SILSOE TECHNOLOGY LIMITED, Ampthill, Bedfordshire MK45 2XE (GB)
(72) Inventor: REED, John, Nicholas, Silsoe Research Institute, Silsoe, Bedford MK45 5HS (GB); MILES, Simon, John, Silsoe Research Institue, Silsoe, Bedford MK45 4HS (GB)
(74) Representative: Whitaker, Iain Mark
(86) International application number: PCT/GB2002/003416
(87) International publication number: WO 2003/011536

(56) References cited:
- WO-A-01/79089
- PATENT ABSTRACTS OF JAPAN vol. 011, no. 086 (M-572), 17 March 1987 (1987-03-17) -& JP 61 241032 A (OMRON TATEISI ELECTRONICS CO), 27 October 1986 (1986-10-27)
- PATENT ABSTRACTS OF JAPAN vol. 013, no. 588 (M-912), 25 December 1989 (1989-12-25) -& JP 01 246088 A (NAGANO PREF GOV), 2 October 1989 (1989-10-02)
- PATENT ABSTRACTS OF JAPAN vol. 1999, no. 14, 22 December 1999 (1999-12-22) -& JP 11 245188 A (KAO CORP), 14 September 1999 (1999-09-14)

## Description

### Field of the Invention

The present invention concerns improvements in and relating to gripping apparatus for picking up and placement of articles and is particularly relevant to pick and place handling of sticky or tacky articles or articles to be moved from and/or into tightly confined locations such as recessed packaging compartments. A primary use for the method and apparatus of the present invention is in handling of a wide range of bare food products for packaging them.

### Background to the Invention

Handling of bare, i.e. unwrapped, food products in preparation and packaging of the products, especially where they are sugar-coated or for other reasons substantially sticky/tacky on their external surfaces, is notoriously difficult to efficiently automate. A major problem with handling of such products as iced cakes, glazed cherries, chocolate enrobed products and other confectionery items, is that an automated handling system seeking to use grippers to pick up each product for transfer and deposition, faces the difficulty of cleanly discharging the product. The product will generally adhere to the gripper fingers at least temporarily when released, leading to inaccurate placement of the product and disruption of synchronous running of an automated production line. Furthermore, tacky surface coating from the product may begin to build up as a residue on the gripper assembly, contrary to the requirements for strict hygiene during food production and packaging.

Largely for these above reasons, the food industry generally, relies upon manual pick and place handling of the food products. This is, of course, inherently very labour intensive and costs the food industry billions of pounds per year in labour.

Whereas automation of production in the automotive industry now appears to be approaching maturity and the major robot manufacturers are interested in applying their technology to the food industry as a significant new area of opportunity, their ability to address the needs of the food industry is severely limited by the inadequacies of the currently available end-effectors for handling of food articles. An apparatus for tightly gripping and rotating an item is disclosed in JP-01246088 and comprises opposing endless belts on opposing gripping fingers that cycle to rotate the item while forcing the fingers together.

### Summary of the Invention

According to the present invention there is provided a gripping apparatus for pick and place handling of articles, wherein the apparatus comprises:
a supporting frame; and
a pair of gripping fingers mounted directly or indirectly to the supporting frame and moveable towards each other so as to grip an article therebetween or moveable apart for conventional release of the article, each finger being faced with a respective facing material web which is powered to be moveable over the surface of the finger, whereby the gripping fingers are configured so that an article gripped between the gripping fingers may be picked up, released and moved therealong, in use, by movement of the facing material webs and independently of movement of the gripping fingers toward or away from each other.

Preferably, the gripping fingers have actuator means by means of which the gripping finger is extended and retracted and wherein the gripped article between the gripper fingers, is released without substantially opening the gripper fingers by moving, in use, the facing material web in an opposite direction to a retracting movement of the gripper fingers. The oppositely directed motion of the web for release is suitably equal in extract to the retraction motion of the gripping fingers, whereby the article may be released from the gripping fingers without being retracted/raised by the retracting fingers. A gripped article may thus be released while remaining held against a surface and even in a confined space such as a packing pocket.

Preferably the facing material web of each gripping finger is in the form of a tape or band which is mounted at one end to a tensioning spool, which spool is powered to wind up the respective facing tape or band.

Advantageously the powered tensioning spool is powered by a resilient biasing means, for example a spring coil. This is most useful where the gripping fingers are powered to extend and retract, providing a simple and efficient means for causing equal and oppositely directed motion of the tape or band relative to the finger.

The tensioning spool may alternatively be motorised. With a motorised spool at at least one end of the tape or band, and resilient biassing means or motorised spool at the other end, the tape or band may be drawn in either direction of motion and the operation of the gripping apparatus need not rely on powered extension/retraction of the gripping fingers.

Preferably the tape or band is mounted at one end to the spool and at the other end to an anchoring point.

Advantageously each gripping finger has a respective actuator, e.g. piston and cylinder or rack and pinion, by means of which the gripping finger is extended and retracted.

Each actuator is suitably mounted together with the tensioning spool and the anchoring point of the tape or band on a support module, each finger having its own respective support module, the support modules being movable toward or away from each other for movement of the fingers toward or away from each other.

Preferably each gripping finger comprises a gripping plate which is mounted to one end of an actuator, e.g. to the end of the piston rod of a piston and cylinder or the rack of a rack and pinion.

Preferably the tape or band of facing material web passes over the internal/gripping major face of the respective gripping finger, around the tip of the gripping finger and then back up over the obverse face of the gripping finger.

Advantageously the tip of the gripping finger is rounded and suitably radiused or provided with a bearing to reduce frictional resistance on the tape or band as it moves around the finger tip.

Preferably the anchoring point is comprised in a tape or band feed mechanism that is adapted to index forward at intervals to provide a fresh length of tape or band to extend at least over part of the gripping finger.

Preferably the indexing feed mechanism is a motorised spool and the tensioning spool is also a motorised spool.

Preferably the apparatus is adapted for self-cleaning of the facing material web, having a cleaning head adjacent the web to clean it as it passes thereby.

According to the present invention there is also provided a gripping head for a gripping apparatus and comprising a pair of gripping fingers which are movable towards each other so as to grip an article therebetween or movable apart for conventional release of the article, each finger being faced with a respective facing material web which is powered to be movable over the surface of the finger, whereby the gripping fingers are configured so that an article gripped between the gripping fingers may be picked up, released and/or moved therealong, in use, by a movement of the facing material webs and independently of movement of the gripping fingers toward or away from each other.

### Brief Description of the Drawings

A preferred embodiment of the present invention will now be more particularly described, by way of example, with reference to the accompanying drawings, wherein:
Figure 1 is a simple schematic diagram of the gripping head of the gripping apparatus of the present invention with the gripping fingers of the gripping head substantially surrounding the sides of the gripped article;
Figure 2 is a view similar to Figure 1 but with the gripping head retracted and close to the point of release of the gripped article;
Figure 3 is a schematic general assembly view of the gripping apparatus; and
Figure 4 is a perspective view of the gripping head of the gripping apparatus.

### Description of the Preferred Embodiment

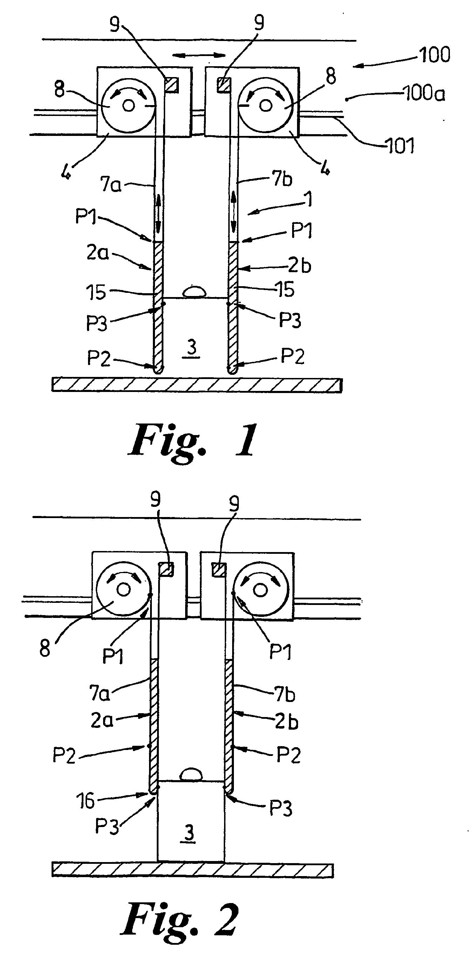

Referring to figures 1 to 4, the illustrated embodiment of apparatus of the present invention comprises a general supportive framework 100 having a beam 100a from which depends a gripping head 1. The gripping head 1 comprises a pair of opposing gripping members or fingers, 2a, 2b, that are assembled to the beam 100a to reciprocate together in a substantially recti-linear clamping motion to clamp an article such as a fairy cake 3 or a glacé cherry 3' between them.

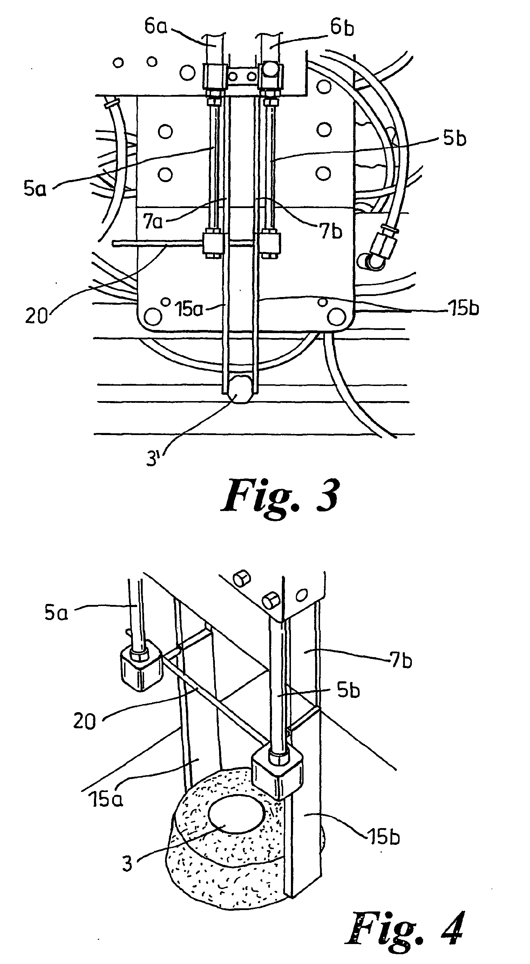

The gripping fingers 2a, 2b are mounted extending substantially vertically downwardly from the ends of a substantially mutually parallel pair of substantially vertically arranged piston rods 5a, 5b (figures 3 and 4). The piston rods 5a, 5b reciprocate substantially vertically such that with downward advancement they may pick up and place down the article 3, 3' and when raised may be moved to a different location.

The piston rods 5a, 5b, each extend from a respective one of a pair of piston cylinders 6a, 6b which are each mounted to a respective support module 4 that is configured to move along a track 101 on the beam 100a for movement of the gripping fingers 2a, 2b together or apart. A linking rod 20 links the lower ends of the piston rods 5a, 5b to keep the fingers in a rigidly parallel spaced configuration as the fingers 2a, 2b move together or apart.

The beam 100a, in turn, is suitably moveable and serves as part of a transport carriage on the frame 100 for transfer of the article 3, 3' to a desired location for deposition. In one simple arrangement the beam 100a may be mounted on its own rails (not shown) to move along a straight axis fore and aft or side-to-side of the frame 100.

The gripping fingers 2a, 2b are of a specialised construction. In the illustrated embodiment, they comprise a pair of substantially rectangular plates 15a, 15b, suitably of a metal or metal alloy or rigid and robust plastics material. These plates 15a, 15b are each faced with a respective thin tape/band 7a, 7b that is slidingly moveable over the surface of the plate 15a, 15b. Each facing tape 7a, 7b is suitably of cellophane or acetate or other plastics polymer that is food grade, i.e. safe for use with food and may, for example, resemble an adhesive tape such as Sellotape® but is adhesive free. It extends at one end from a spring-loaded or motorised spool 8 and passes down the outer major face of the plate 15a, 15b to which it is mounted and around the radiused tip 16 of the plate 15 and then extends back up the inside (i.e. gripping) face of the plate 15 to be anchored by an anchoring mount 9.

The anchoring mount 9 is illustrated as a static block but in an alternative preferred embodiment (not illustrated) may comprise a spool that is adapted to be indexed forward to feed fresh lengths of tape 7a, 7b to extend over the fingers 2a, 2b. The spring loaded or motorised tensioning spool 8 and the anchoring mount 9 are both located on the support module 4 of the respective gripper finger 2a, 2b so that each finger 2a, 2b is self-contained, complete with its facing tape 7a, 7b and tape tensioning/drive mechanism - spool 8 and anchor mount 9. Accordingly, whether the respective modules 4, and hence fingers 2a, 2b are moving together or apart or not, the facing tapes 7a, 7b of the fingers 2a, 2b can operate, sliding over the surfaces of the fingers 2a, 2b.

In a typical grip and release cycle the fingers 2a, 2b extend pulling the tapes 7a, 7b out from their spools 8.

Once extended the fingers 2a, 2b can then be closed together to grip an article 3. To release an article 3 (without opening the fingers 2a, 2b) the fingers 2a, 2b are simultaneously withdrawn towards the beam of the gripper frame 100a. This does not cause the article 3 to move since its only contact with the finger 2a, 2b is through the anchored (non-moving) side of the tape 7a, 7b. As the finger 2a, 2b withdraws the tape 7a, 7b on the outside of the finger 2a, 2b it is wound up around the finger tip 16. The continuously held object 3 effectively 'emerges' from the end of the withdrawing fingers 2a, 2b until it is released as the contacting tape 7a, 7b is peeled away from it around the finger tip radius 16.

Figures 1 and 2 show an example action of deposition of an article without substantial movement apart of the fingers 2a, 2b.

Referring to figure 1, the gripping fingers 2a, 2b are shown gripping an article 3, such as a fairy cake between them. The position of three selected reference points on each of the tapes 7a, 7b are highlighted as P1 to P3. A comparison of Figure 1 with figure 2 will reveal that these points have shifted in the figure 2 view, the tapes 7a, 7b having been reeled in by their respective motorised or spring-loaded tensioning spool 8. The tapes 7a, 7b are reeled in upwardly (onto the tensioning spool 8 as the pistons 5a, 5b are retracted and are reeled in at twice the rate of the retraction of the pistons 5a, 5b (they have twice the piston/finger distance to travel). As a result the cake 3 is gradually released from the gripper

it will be appreciated that, since the expulsion of the cakes 3 occurs without needing to move the gripper fingers 2a, 2b apart, the cake 3 can be reliably placed accurately and precisely into a narrow packaging space such as a cup-shaped recess in a thermoformed plastics packaging tray. Stickiness/tackiness of the cake does not disrupt accuracy of the placement. Conversely pickup of the cake 3 may also be achieved from such a confined space with only minimal opening of the fingers 2a, 2b to position the cake 3 between them. This may be especially useful where only part of the cake 3 or other article is protruding from the confined space and, to get a better grip, the movement of the tapes 7a, 7b is used to tractor the article up more fully between the fingers 2a, 2b.

The ability of the apparatus to operate within confined spaces makes it potentially of great use not only in the food industry but also in the likes of the pharmaceutical industry and electronics industry.

The pick and place handling is carried out with great efficiency and the renewing supply of tape from an indexed supply reel in place of the anchoring block 9 eliminates the potential build up of food residue on the fingers 2a, 2b. By way of alternative to fed renewal of the tape, the apparatus could be self-cleaning by incorporating a tape cleaning head, for example having a brush to remove food residue as the tape passes.

## Claims

1. A gripping apparatus for pick and place handling of articles, wherein the apparatus comprises:
a supporting frame (100); and
a pair of gripping fingers (2a,2b) mounted directly or indirectly to the supporting frame (100) and moveable towards each other so as to grip an article (3) therebetween or moveable apart for conventional release of the article, each finger (2a,2b) being faced with a respective facing material web (7a,7b) which is powered to be moveable over the surface of the finger (2a,2b), **characterised in that** the apparatus the griping fingers (2a, 2b) are configured so that an article gripped between the gripping fingers (2a,2b) may be picked up, released and moved therealong, in use, by movement of the facing material webs (7a,7b) and independently of movement of the gripping fingers (2a,2b) toward or away from each other.

2. A gripping apparatus as claimed in claim 1, wherein the gripping fingers (2a,2b) have actuator means (5a,5b) by means of which the gripping finger (2a,2b) is extended and retracted and wherein the gripped article (3) between the gripping fingers (2a,2b), is released without substantially opening the gripping fingers (2a,2b), by moving, in use, the facing material web (7a,7b) in an opposite direction to a retracting movement of the gripping fingers (2a,2b).

3. A gripping apparatus as claimed in claim 1 or 2, wherein the facing material web (7a,7b) of each gripping finger (2a,2b) is in the form of a tape or band which is mounted at one end to a tensioning spool (8), which spool is powered to wind up the respective facing tape or band (7a,7b).

4. A gripping apparatus as claimed in claim 3, wherein the powered tensioning spool (8) is powered by a resilient biasing means.

5. A gripping apparatus as claimed in claim 3 wherein said powered tensioning spool (8) is powered by a motor or the apparatus has a further spool at the other end of the tape or band and which is powered by a motor.

6. A gripping apparatus as claimed in claim 3, 4 or 5 wherein the tape or band (7a,7b) is mounted at one end to the spool (8) and at the other end to an anchoring point (9).

7. A gripping apparatus as claimed in claim 6, wherein each gripping finger (2a,2b) has its own respective actuator (5a,5b) and each actuator is mounted together with the tensioning spool (8) and the anchoring point (9) of the tape or band (7a,7b) on a support module (4), each finger (2a,2b) having its own respective support module (4), the support modules being movable toward or away from each other for movement of the fingers (2a,2b) toward or away from each other.

8. A gripping apparatus as claimed in any preceding claim, wherein each gripping finger (2a,2b) comprises a gripping plate (15a,15b) which is mounted to one end of an extendable actuator (5).

9. A gripping apparatus as claimed in any of the claims 3 to 7, wherein the tape or band of facing material web (7a,7b) passes over the internal gripping major face of the respective gripping finger (2a,2b), around the tip (16) of the gripping finger (2a,2b) and then back up over the obverse face of the gripping finger (2a,2b).

10. A gripping apparatus as claimed in claim 9, wherein the tip (16) of the gripping finger (2a,2b) is rounded and suitably radiused or provided with a bearing to reduce frictional resistance on the tape or band as it moves around the finger tip (16).

11. A gripping apparatus as claimed in claim 6 and optionally any other claim, wherein the anchoring point (9) is comprised in a tape or band feed mechanism that is adapted to index forward at intervals to provide a fresh length of tape or band to extend at least over part of the gripping finger.

12. A gripping apparatus as claimed in claim 10 or 11 wherein the indexing feed mechanism is a motorised spool and the tensioning spool is also a motorised spool.

13. A gripping head for a gripping apparatus and comprising a pair of gripping fingers (2a,2b) which are movable towards each other so as to grip an article therebetween or movable apart for conventional release of the article, each finger (2a,2b) being faced with a respective facing material web (7a,7b) which is powered to be movable over the surface of the finger, **characterised in that** the gripping fingers (2a,2b) are configured so that an article gripped between the gripping fingers may be picked up, released and moved therealong, in use, by movement of the facing material webs (7a,7b) and independently of movement of the gripping fingers (2a,2b) toward or away from each other.

## Patentansprüche

1. Greifvorrichtung für das Aufnehmen und Handhaben beim Anordnen von Artikeln, wobei die Vorrichtung aufweist:
einen Stützrahmen (100); und
ein Paar Greiffinger (2a, 2b), die direkt oder indirekt am Stützrahmen (100) montiert und in Richtung zueinander beweglich sind, um so einen Artikel (3) dazwischen zu ergreifen, oder die für das konventionelle Freigeben des Artikels auseinander beweglich sind, wobei jeder Finger (2a, 2b) mit einer entsprechenden Beschichtungsmaterialbahn (7a, 7b) beschichtet wird, die angetrieben wird, so dass sie über die Oberfläche des Fingers (2a, 2b) beweglich ist, **dadurch gekennzeichnet, dass** die Greiffinger (2a, 2b) so ausgebildet sind, dass ein Artikel, der zwischen den Greiffingern (2a, 2b) ergriffen wird, bei Benutzung durch die Bewegung der Beschichtungsmaterialbahnen (7a, 7b) und unabhängig von der Bewegung der Greiffinger (2a, 2b) in Richtung zueinander oder weg voneinander aufgenommen, freigegeben und dort entlang bewegt werden kann,

2. Greifvorrichtung nach Anspruch 1, bei der die Greiffinger (2a, 2b) ein Betätigungselementmittel (5a, 5b) aufweisen, mittels dessen der Greiffinger (2a, 2b) ausgezogen und zurückgezogen wird, und bei der der ergriffene Artikel (3) zwischen den Greiffingern (2a, 2b) freigegeben wird, ohne dass im Wesentlichen die Greiffinger (2a, 2b) geöffnet werden, indem die Beschichtungsmaterialbahn (7a, 7b) bei Benutzung in einer entgegengesetzten Richtung zu einer Zurückziehbewegung der Greiffinger (2a, 2b) bewegt wird.

3. Greifvorrichtung nach Anspruch 1 oder 2, bei der die Beschichtungsmaterialbahn (7a, 7b) eines jeden Greiffingers (2a, 2b) in der Form eines Bandes oder Streifens vorliegt, das an einem Ende an einer Spannrolle (8) angebracht ist, wobei die Rolle angetrieben wird, um das entsprechende Beschichtungsband oder -streifen (7a, 7b) aufzuwickeln.

4. Greifvorrichtung nach Anspruch 3, bei der die angetriebene Spannrolle (8) mittels eines elastischen Vorspannmittels angetrieben wird.

5. Greifvorrichtung nach Anspruch 3, bei der die angetriebene Spannrolle (8) durch einen Motor angetrieben wird oder die Vorrichtung eine weitere Rolle am anderen Ende des Bandes oder Streifens aufweist, und die von einem Motor angetrieben wird.

6. Greifvorrichtung nach Anspruch 3, 4 oder 5, bei der das Band oder der Streifen (7a, 7b) an einem Ende der Rolle (8) und am anderen Ende an einer Verankerungsstelle (9) angebracht ist.

7. Greifvorrichtung nach Anspruch 6, bei der ein jeder Greiffinger (2a, 2b) sein eigenes jeweiliges Betätigungselement (5a, 5b) aufweist und jedes Betätigungselement zusammen mit der Spannrolle (8) und der Verankerungsstelle (9) des Bandes oder des Streifens (7a, 7b) auf einem Trägermodul (4) angebracht ist, wobei jeder Finger (2a, 2b) seinen eigenen jeweiligen Trägermodul (4) aufweist, wobei die Trägermodule in Richtung zueinander oder weg voneinander für eine Bewegung der Finger (2a, 2b) in Richtung zueinander oder weg voneinander beweglich sind.

8. Greifvorrichtung nach einem der vorhergehenden Ansprüche, bei der ein jeder Greiffinger (2a, 2b) eine Greifplatte (15a, 15b) aufweist, die an einem Ende eines ausziehbaren Betätigungselementes (5) angebracht ist.

9. Greifvorrichtung nach einem der Ansprüche 3 bis 7, bei der das Band oder der Streifen der Beschichtungsmaterialbahn (7a, 7b) über die innere Greifhauptfläche des jeweiligen Greiffingers (2a, 2b) um das Ende (16) des Greiffingers (2a, 2b) und danach zurück nach oben über die Gegenfläche des Greiffingers (2a, 2b) gelangt.

10. Greifvorrichtung nach Anspruch 9, bei der das Ende (16) des Greiffingers (2a, 2b) abgerundet und in geeigneter Weise mit einem Radius versehen oder mit einem Lager ausgestattet ist, um den Reibungswiderstand auf das Band oder den Streifen zu verringern, während es sich um das Ende (16) des Fingers bewegt.

11. Greifvorrichtung nach Anspruch 6 und wahlfrei jedem anderen Anspruch, bei der die Verankerungsstelle (9) einen Band- oder Streifenzuführmechanismus aufweist, der ausgeführt ist, um in Intervallen weiter vorwärtszuschalten, um eine neue Länge des Bandes oder des Streifens bereitzustellen, um sich zumindestens über einen Teil des Greiffingers zu erstrecken.

12. Greifvorrichtung nach Anspruch 10 oder 11, bei der der Schaltzuführmechanismus eine mit Motor versehene Rolle ist, und die Spannrolle ebenfalls eine mit Motor versehene Rolle ist.

13. Greifkopf für eine Greifvorrichtung und die aufweist: ein Paar Greiffinger (2a, 2b), die in Richtung zueinander beweglich sind, um so einen Artikel dazwischen zu ergreifen, oder die für das konventionelle Freigeben des Artikels auseinander beweglich sind, wobei jeder Finger (2a, 2b) mit einer entsprechenden Beschichtungsmaterialbahn (7a, 7b) beschichtet wird, die angetrieben wird, so dass sie über die Oberfläche des Fingers beweglich ist, **dadurch gekennzeichnet, dass** die Greiffinger (2a, 2b) so ausgebildet sind, dass ein Artikel, der zwischen den Greiffingem ergriffen wird, bei Benutzung durch die Bewegung der Beschichtungsmaterialbahnen (7a, 7b) und unabhängig von der Bewegung der Greiffinger (2a, 2b) in Richtung zueinander oder weg voneinander aufgenommen, freigegeben und dort entlang bewegt werden kann.

## Revendications

1. Dispositif de préhension, destiné à une manutention par transfert d'articles, comprenant:
un cadre de support (100); et
une paire de doigts de préhension (2a, 2b), montés de manière directe ou indirecte sur le cadre de support (100) et pouvant être rapprochés l'un de l'autre pour saisir un article (3) entre eux, ou pouvant être écartés l'un de l'autre pour dégager de manière conventionnelle l'article, chaque doigt (2a, 2b) étant revêtu d'un bande de matériau de revêtement (7a, 7b) actionnée de sorte à pouvoir être déplacée au-dessus de la surface du doigt (2a, 2b), **caractérisé en ce que** le dispositif et les doigts de préhension (2a, 2b) sont configurés de sorte qu'un article saisi entre les doigts de préhension (2a, 2b) peut être saisi, dégagé et déplacé en service par suite du déplacement des bandes de matériau de revêtement (7a, 7b), indépendamment du rapprochement ou de l'écartement des doigts de préhension (2a, 2b).

2. Dispositif de préhension selon la revendication 1, dans lequel les doigts de préhension (2a, 2b) comportent un moyen d'actionnement (5a, 5b), étendant et rétractant le doit de préhension (2a, 2b), l'article saisi (3) entre les doigts de préhension (2a, 3b) étant dégagé sans pratiquement ouvrir les doigts de préhension (2a, 3b), en déplaçant en service la bande de matériau de revêtement (7a, 7b) dans une direction opposée à un déplacement de rétraction des doigts de préhension (2a, 2b).

3. Dispositif de préhension selon les revendications 1 ou 2, dans lequel la bande de matériau de revêtement (7a, 7b) de chaque doigt de préhension (2a, 2b) a la forme d'un ruban ou d'une bande monté au niveau d'une extrémité sur une bobine de tension (8), la bobine étant actionnée afin d'enrouler le ruban ou la bande de revêtement respective (7a, 7b).

4. Dispositif de préhension selon la revendication 3, dans lequel la bobine de tension actionnée (8) est actionnée par un moyen poussoir élastique.

5. Dispositif de préhension selon la revendication 3, dans lequel ladite bobine de tension actionnée (8) est actionnée par un moteur, le dispositif pouvant aussi comporter une bobine additionnelle au niveau de l'autre extrémité du ruban ou de la bande, actionnée par un moteur.

6. Dispositif de préhension selon les revendications 3, 4 ou 5, dans lequel le ruban ou la bande (7a, 7b) est monté au niveau d'une extrémité sur la bobine (8) et au niveau de l'autre extrémité sur un point d'ancrage (9).

7. Dispositif de préhension selon la revendication 6, dans lequel chaque doigt de préhension (2a, 2b) comporte son propre dispositif d'actionnement respectif (5a, 5b), chaque dispositif d'actionnement étant monté avec la bobine de tension (8) et le point d'ancrage (9) du ruban ou de la bande (7a, 7b) sur un module de support (4), chaque doigt (2a, 2b) comportant son propre module de support respectif (4), les modules de support pouvant être rapprochés l'un de l'autre ou écartés l'un de l'autre pour rapprocher ou écarter les doigts (2a, 2b) l'un de l'autre.

8. Dispositif de préhension selon l'une quelconque des revendications précédentes, dans lequel chaque doigt de préhension (2a, 2b) comprend une plaque de préhension (15a, 15b) montée sur une extrémité d'un dispositif d'actionnement extensible (5).

9. Dispositif de préhension selon l'une quelconque des revendications 3 à 7, dans lequel le ruban ou la bande de matériau de revêtement (7a, 7b) passe au-dessus de la face de préhension interne majeure du doigt de préhension respectif (2a, 2b), autour de la pointe (16) du doigt de préhension (2a, 2b), avant de repasser au-dessus de la face avers du doigt de préhension (2a, 2b).

10. Dispositif de préhension selon la revendication 9, dans lequel la pointe (16) du doigt de préhension (2a, 2b) est bombée et arrondie de manière appropriée ou comporte un palier pour réduire la résistance au frottement sur le ruban ou la bande lors de son déplacement autour de la pointe du doigt (16).

11. Dispositif de préhension selon la revendication 6 et optionnellement selon une quelconque autre revendication, dans lequel le point d'ancrage (9) est inclus dans un mécanisme d'alimentation du ruban ou de la bande, destiné à être déplacé par indexation vers l'avant à des intervalles définis pour fournir une nouvelle longueur de ruban ou de bande, s'étendant au moins au-dessus d'une partie du doigt de préhension.

12. Dispositif de préhension selon les revendications 10 ou 11, dans lequel le mécanisme d'alimentation à indexation est constitué par une bobine motorisée, la bobine de tension étant également constituée par une bobine motorisée.

13. Tête de préhension pour un dispositif de préhension, comprenant une paire de doigts de préhension (2a, 2b), pouvant être rapprochés l'un de l'autre pour saisir un article entre eux ou pouvant être écartés en vue d'un dégagement conventionnel de l'article, chaque doigt (2a, 2b) étant revêtu d'une bande de matériau de revêtement respective (7a, 7b) actionnée de sorte à être déplacée au-dessus de la surface du doigt, **caractérisée en ce que** les doigts de préhension (2a, 2b) sont configurés de sorte que l'article saisi entre les doigts de préhension peut être saisi, dégagé et déplacé en service par suite du déplacement des bandes de matériau de revêtement (7a, 7b), indépendamment du rapprochement ou de l'écartement des doigts de préhension (2a, 2b).
